## Europäisches Patentamt
## European Patent Office
## Office européen des brevets

(18)

(11) Publication number: **0 051 896**

**B1**

(12) **EUROPEAN PATENT SPECIFICATION**

(45) Date of publication of patent specification: **02.10.85**

(51) Int. Cl.⁴: **G 09 B 9/08**

(21) Application number: **81201235.9**

(22) Date of filing: **30.10.81**

(54) **Flight simulator.**

(30) Priority: **07.11.80 NL 8006091**

(43) Date of publication of application:
**19.05.82 Bulletin 82/20**

(45) Publication of the grant of the patent:
**02.10.85 Bulletin 85/40**

(84) Designated Contracting States:
**DE FR GB IT**

(56) References cited:
**FR-A-2 178 495**
**US-A-3 063 160**
**US-A-3 463 866**
**US-A-4 236 325**

(73) Proprietor: **Fokker B.V.**
**No.231 Schipholdijk**
**NL-1117 AB Schiphol (NL)**

(72) Inventor: **Lam, Wilhelmus Johannes**
**No. 582 Engelandlaan**
**NL-2034 HA Haarlem (NL)**
Inventor: **De Vries, Luitzen**
**No. 19 Top Naefflaan**
**NL-1183 BP Amstelveen (NL)**

(74) Representative: **Schumann, Bernard Herman Johan et al**
**OCTROOIBUREAU ARNOLD & SIEDSMA**
**Sweelinckplein 1**
**NL-2517 GK The Hague (NL)**

Courier Press, Leamington Spa, England.

## Description

The invention relates to a flight simulator comprising:

(1) an element whose position may change during the flight, e.g. a control member such as a control-column and

(2) servo-means coupled with said element, said servo-means comprising

(a) an amplifier

(b) a servo-motor coupled with the output of said amplifier,

(c) a force transducer arranged between said servo-motor and said element and having its output coupled with a first input of said ampifier,

(d) a position transducer coupled with said element and having its output coupled with a second input of said amplifier, and

(e) a computer for calculating a force associated with the state of said element and supplying a related signal to the amplifier on the basis of the flight conditions and the relevant mechanical properties of said element, said computer being coupled with the ampifier through an electrical analogue representing the Coulomb-friction, the damping and the mass of said element.

Such a flight simulator is known from e.g. US—A—3 463 866.

In this prior art simulator use is made of a feedback-loop comprising an operational, i.e. an infinite gain, amplifier, simulating the Coulomb-friction. Electronically it is impossible to realize an infinite gain. Due to this impossibility the prior art system is always subjected to an offset-signal corresponding with a resulting force applied to the control-element, so that control element maintains a very slow systematic movement during periods in which the pilot or the trainee does not apply a force on the control column. Especially in simultation systems which should provide mechanical properties sensed by the trainee and simulating realistic forces with a very high degree of fidelity, such an inconvenience cannot be tolerated.

Furthermore this prior art does not enable simulation of a zero mass, which nevertheless may be desired in view of theoretical studies or measurements in which all individual parameters are to be assessed.

The invention has for its object to provide a flight simulator in which the Coulomb-friction is simulated with a very high degree of fidelity whilst avoiding the systematic resulting driving force tending to alter the position of the control element. Furthermore the invention has for its object to provide a system, in which the mass of the control element may be adjusted to zero value.

In view of the above objects the invention provides a flight simulator of the type described in the preamble and characterized in that said analogue comprises a non-linear amplifier having a dead band, i.e. supplying a zero output sigal for input signals below a certain threshold, said amplifier being provided with a negative feedback loop comprising a differentiator, said dead band corresponding with said friction, the gain of said amplifier corresponding with the damping and the gain of said feedback-loop corresponding with the mass of said element.

The dead band of the non-linear amplifier may be adjustable. In this manner the Coulomb-friction may be adjusted as desired.

Furthermore the gain of the non-linear amplifier may be adjustable. In this way the damping can be chosen as desired.

The gain of the feedback-loop comprising the differentiator may also be adjustable so that the mass of said element may be chosen at will.

The invention will now be explained in more detail with reference to the accompanying drawings.

Fig. 1 is a schematic representation of a real system comprising a control-member and the element to be controlled thereby and of the set of forces occurring therebetween through the coupling;

Fig. 2 shows a mechanical analogue corresponding to Fig. 1, in which the set of forces is illustrated in more detail;

Fig. 3 again shows the mechanical analogue of the aft system;

Fig. 4 is a block diagram of the part of the known flight simulator which is most important for a good understanding of the invention;

Fig. 5 illustrates the transfer function of the circuit-arrangement of Fig. 4 simulating the friction.

Fig. 6 shows an embodiment of a fourth order flight simulator in accordance with the invention; and

Fig. 7 shows by way of example a cascading of two second order blocks constituting together a fourth order analogue of the aft system 7.

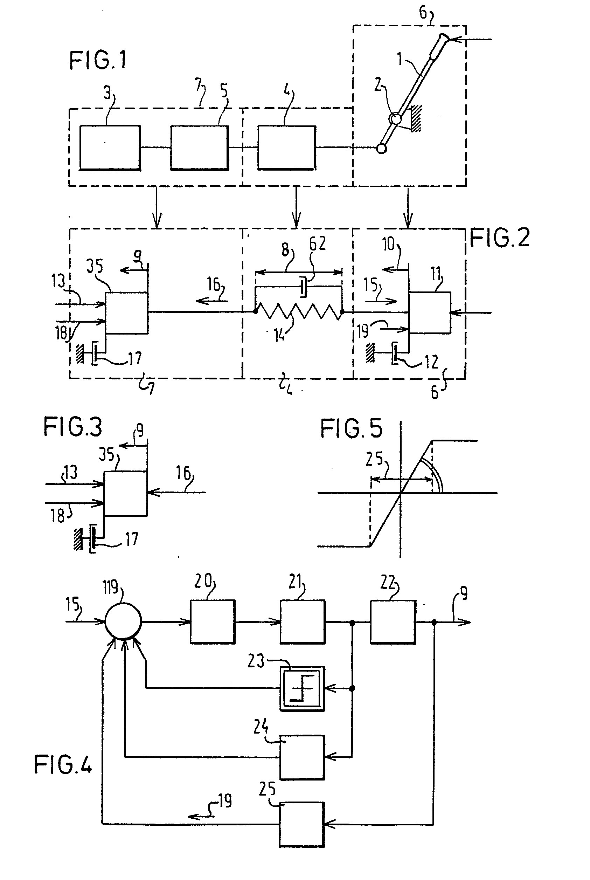

For a good understanding of the limitations and deficiences of the known flight simulator reference is first made to Figures 1 to 5.

The system shown in Fig. 1 comprises a control-column 1 on which a force F can be exerted around a fulcrum 2. A steering surface 3 is actuated through a coupling 4 with damping 62 consisting of rods, cables and the like and a servo-mechanism 5.

The block 6 is usually termed the "forward system" whereas the block 7 is usually termed the "aft system".

Fig. 2 shows the mechanical analogue of the diagram of Fig. 1.

In the relationship illustrated the various elements satisfy the following equations:

$$x_c = x_2 - x_1 \tag{1}$$

$$F_1 = M_1 \ddot{x}_1 + K_{D1} \dot{x}_1 + F_{syst.1} + K_c x_c + K_{DC} \dot{x}_c \tag{2}$$

$$F_1 = F_2 \tag{3}$$

$$F_2 = M_2 \ddot{x}_2 + K_{D2} \dot{x}_2 + F_{syst.2} + F_{CF2} \tag{4}$$

$$F_{syst.2} = f(x_2, \ldots) \tag{5}$$

The various elements are designated by reference numerals. They correspond in accordance with the following list to the various physical characterizing quantities:

$8 = x_c =$ elongation or, as the case may be, depression of the coupling 4,

$9 = x_2 =$ displacement of the steering surface 3,

$10 = x_1 =$ displacement of the control-column 1,

$11 = M_1 =$ mass of the control-column 1,

$12 = K_{D1} =$ damping coefficient of the control-column 1,

$13 = F_{syst.1} =$ system forces e.g. gravity acting on $M_2$.

$14 = K_c =$ rigidity of the coupling 4

$15 = F_1 =$ force exerted by the coupling 4 on $M_1$,

$16 = F_2 =$ force exerted by the coupling 4 on $M_2$,

$17 = K_{D2} =$ damping coefficient of steering surface 3,

$18 = F_{CF2} =$ frictional forces acting on $M_2$,

$19 = F_{syst.2} =$ system forces acting on $M_1$,

$62 = K_{DC} =$ damping coefficient of the coupling 4.

The equations (1) to (5) provide in common a system of at least the fourth order, since the forward system and the aft system are each of at least the second order. The equations (1) to (4) need not be further explained. Equation (5) shows that $F_{syst.2}$ may be a function of other quantities than of $x_2$. In this case the order of the system may be higher and even much higher than 2.

Referring to figure 3 equation (4) is rewritten as follows:

$$\ddot{x}_2 = \frac{F_2 - K_{D2}\dot{x} - F_{syst.2} - F_{CF2}}{M_2} \quad (4a)$$

It furthermore applies:

$$\dot{x}_2 = \int \ddot{x}_2 dt \quad (6)$$

$$x_2 = \int \dot{x}_2 dt = \int\int \ddot{x}_2 dt dt \quad (7)$$

$$F_{CF2} = K_{CF2} | \dot{x}_2 | \quad (8)$$

The equations (6) and (7) are self-explanatory. In equation (8) $K_{CF2}$ is the Coulomb-frictional force. Equation (8) shows that the direction of said force is invariably opposite the direction of movement even for very low speeds.

In a static situation:

$$| F_2 - F_{syst.} | \leq | F_{CF2} | \quad (9)$$

and

$$x_2 = 0 \quad (10)$$

$$\dot{x}_2 = 0 \quad (11)$$

$$\ddot{x}_2 = 0 \quad (12)$$

Figure 4 shows a known simulation of a second order system with Coulomb-friction.

The input signal corresponds to the force $F_2$ designated by 15. The output signal corresponds to the position $x_2$ designated by numeral 9. The force signal 15 is applied to a combining circuit 119, the output of which is connected to the input of a divider 20, which divides its input signal by the mass $M_2$. The output of the divider 20 is connected to the input of a first integrator 21, the output of which is connected to the input of a second integrator 22. The output of the first integrator 22 is connected to a first negative feedback circuit 23 and a second negative feedback circuit 24, the outputs of said negative feedback circuits being each connected to an inverting input of the combining circuit 119. The circuit 23 represents the friction and has, for this purpose, a transfer characteristic such that at a positive input signal of any magnitude a fixed, positive output signal is obtained and at a negative input signal of any magnitude a negative output signal of the same, predetermined magnitude is obtained. The second negative feedback circuit 24 represents the viscous damping. The output of the second integrator 22 is connected to an input of a computer 25, the output of which is connected to an inverting input of the combining circuit 119. At an output of the computer, $F_{syst.2}$, reference 19 is available.

It should be noted that the mass $M_2$ in the system of Figure 4 must not become zero. The boundary conditions for the integrators 21 and 22 are chosen to be zero. The damping $K_{D2}$ represented by the second negative feedback circuit 24 is allowed to become zero.

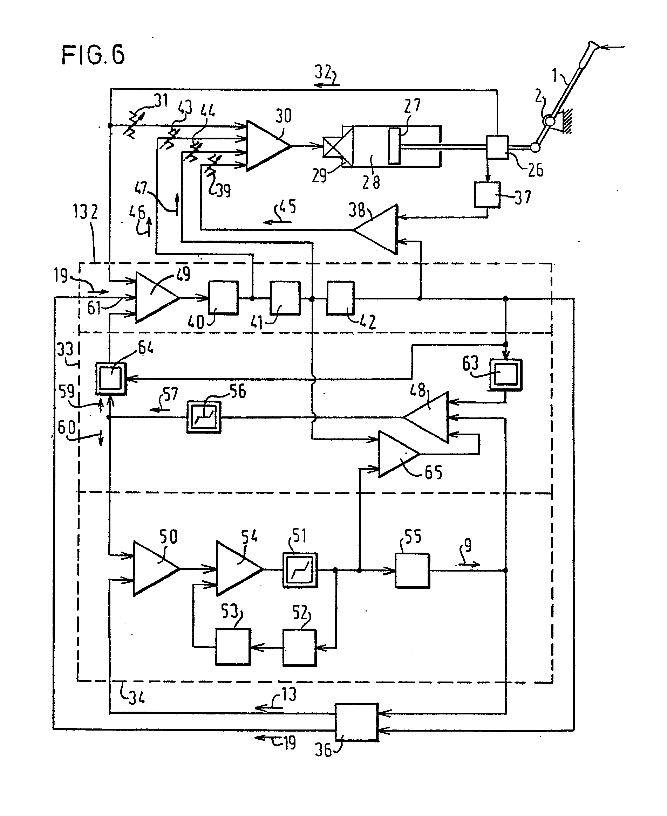

In the box representing the first negative feedback circuit 23 its transfer function is drawn. This transfer function implies an infinitely high amplification factor. Due to the limitations imposed on the amplification factor and transfer function exhibits deviations from the ideal form represented. Figure 5 shows a realistic example of the transfer function. The result of this transfer function of Figure 5, is that the simulated Coulomb friction behaves within the region indicated by 25 like a damping term. Attention is drawn to the fact that exactly in the region around zero value the subjective observation of the friction dominates for a realistic simulation.

A further, extremely important consequence of the transfer function of Figure 5, is that the stabilized final value of $x_2$ always becomes zero by $F_2 = 0$. Consequently the equations (9) to (12) cannot be satisfied.

From the foregoing description, the problems inherent to the prior art will be clear.

Figure 6 shows an embodiment of a fourth order flight simulator in accordance with the invention. The pilot exerts a force F on the control-column 1, which is coupled through the fulcrum 2 and a force transducer 26 with the piston 27 of the linear hydraulic motor 28, the servovalve 29 of which is controlled by an amplifier 30. The force transducer 26 is connected through a potentiometer 31 to an inverting input of the amplifier 30. Without further explanation it will be obvious that the loop described constitutes a force-servo-loop or a force-negative feedback loop. The force transducer 26 provides a signal 32 corresponding to the measured force. In this way static load errors which may be due to the compressibility of the oil employed are corrected. The signal 32 is also applied to a block 132 representing an electrical analogue or substitute diagram of the forward system 6.

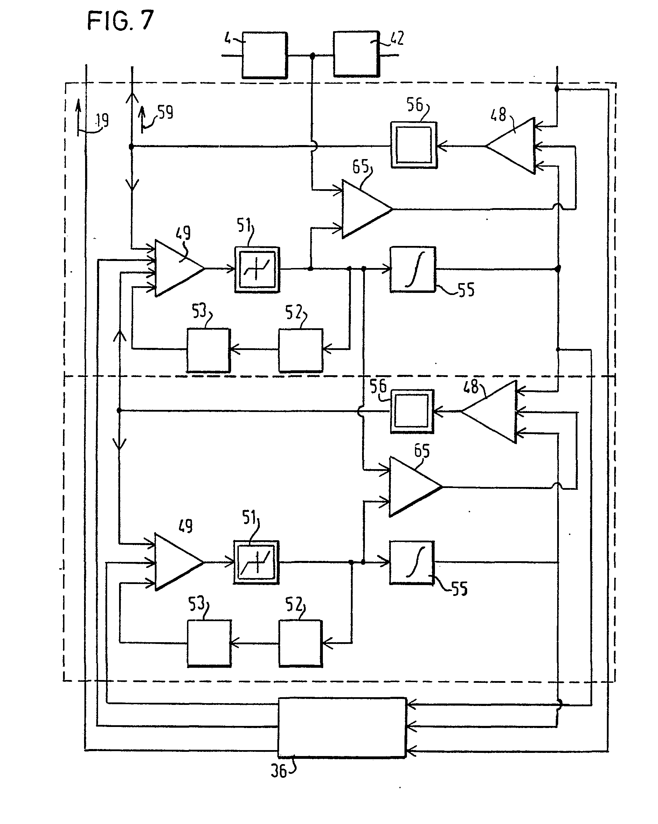

As will be described in further detail the analogue 132 is connected with an analogue 33 representing the properties of the coupling 4. This analogue 33, in turn, is connected with an analogue 34 representing the properties of the aft system 7. It should be emphasized that the analogue 34 may comprise a number of blocks corresponding to the order of the aft system to be simulated, each block representing in itself a second order system as will be discussed hereinafter with reference to Figure 7. Thus, by cascading any desired order of the aft system can be obtained. The analogue 34 is connected to a computer 36, which serves for the simulation of the flight conditions.

With the control-column 1 furthermore a position transducer 37 is coupled, the output of which is connected through an amplifier 38 and a potentiometer 39 to an input of the amplifier 30.

The analogue 132 of the forward system comprises a divider 40 for dividing the input signal by a value proportional to the desired mass of the control-column, a first integrator 41 connected to the output of the divider 40 and a second integrator 42 connected to the output of the first integrator 41, the output of said second integrator 42 being connected through the amplifier 38 and the potentiometer 39 to an input of the amplifier 30. In the present embodiment the output of the divider 40 and the output of the integrator 41 are also coupled with the inputs of the amplifier 30, that is to say, through potentiometers 43 and 44, respectively. The output signal 45 of the amplifier 38 corresponds, as will be evident after the foregoing, to the difference between the desired and the measured positions of the control-column 1. The signals 46 and 47 applied to the potentiometers 43 and 44 respectively serve to stimulate a quick response to changes of the system.

The coupling analogue 33 is constructed in the form of a first combining circuit 48, the first input of which is connected through a non-linear circuit 63 to the output of the second integrator 42. The analogue 132 comprises a second combining circuit 49, the output of which is connected to the input of the divider 40 and a first input of which is connected to the force transducer 26 and a second input of which is connected to the output of the first combining circuit 48. The output of the first combining circuit 48 is connected through a non-linear simulation circuit 56 corresponding to the circuit 51 to be described hereinafter to the third combining circuit 50 and through a second non-linear circuit 64 controllable by the output signal of the second integrator to the second combining circuit 49.

The block 34 comprises a third combining circuit 50, one input of which is coupled with the output of the first combining circuit 48 and the second input of which is connected to the output of the computer 36 and a second order circuit, the input of which is connected to the output of the third combining circuit 50 and the output of which is connected to an input of the computer and a second input of the first combining circuit 48.

The said second order circuit comprises a simulation circuit 51, which only provides an output signal if the absolute value of the input signal exceeds a preselected value, whilst the sign of the output signal is uniquely related with the sign of the input signal and said preselected value corresponds to a static friction. The simulation circuit 51 is provided with a negative feedback circuit formed by a differentiator 52, an adjustable amplifier 53 and a difference amplifier 54. With regard to the transfer function of the simulation circuit 51 it is noted that the dead band and the slope are both independently adjustable. The dead band corresponds to the static friction and the slope of the reciprocal value of the damping.

The adjustable amplifier 53 serves to set the mass $M_2$ of the steering surface. The output of the simulation circuit 51 is connected to the input of an integrator 55, the output of which is coupled with said input of the computer and with said second input of the first combining circuit 48.

The output signal of the second integrator 42 is furthermore applied to a further input of the computer 36. A further output of the computer provides $F_{syst.2}$ on line 19, which signal is applied through the input 61 to the second combining circuit 49.

In anticipation of the discussion of Figure 7, it is now noted with respect to the connection between the second integrator 42 and the computer 36 that to the computer are applied in general various "ideal" i.e. desired or calculated position signals, that is to say, not from, for example, the position transducer 37, since the latter provides a realistic, non-ideal position signal. The signal 9 at the output of the integrator 55 is also such a signal, that is to say, the "position" of the analogue 34.

The two inputs of a fourth combining circuit 65 are connected to the output of the first integrator 41 and to the output of the simulation circuit 51 respectively, whilst its output is connected to an input of the first combining circuit 48. The amplification of the circuit 65, which may be adjustable, represents the damping of the coupling.

At the output of the non-linear circuit 56 a signal 57 is available, which corresponds to the force $F_1 = F_2$. This signal may be considered to be split into a signal 59 corresponding to $F_1$ and an identical signal 60 corresponding to $F_2$.

In the present embodiment the second combining circuit 49 is provided with a further input 61, to which the computer 36 can apply a signal 19 corresponding to $F_{syst.1}$. The signal 9 at the output of the integrator 55 corresponds to $x_2$. The signal

13 at the output of the computer 36 corresponds to $F_{syst.1}$. The signal 9 corresponds to the position of the analogue, that is to say, to the desired position of the control-column.

Figure 7 shows by way of example a cascading of two second order blocks constituting together a fourth order analogue of the aft system 7.

In view of the elaborate explanation of the lower order system shown in Figure 6, it may be sufficient to refer to the example of Figure 7. With the aid thereof it will be apparent how a further enhancement of the order of the system can be obtained.

It is noted that the various units of Figure 7 are designated by the same reference numerals as in Figure 6. This intends to mean that units having the same reference numerals electrically behave in the same manner. There may, however, be differences of adjustment, for example, of amplification factors, dead bands, dividing ratios.

It is emphasized that the flight simulator according to the invention satisfies all equations mentioned above, also those expressing the Coulomb friction. In this way the invention provides a perfectly faithful simulation of all relevant mechanical system properties including friction, and this for any desired order of the system to be simulated.

## Claims

1. A flight simulator comprising:
(1) an element (1) whose position may change during the flight, e.g. a control member such as a control-column (1) and
(2) servo-means coupled with said element, said servo-means comprising:
(a) an amplifier (30),
(b) a servo-motor (28) coupled with the output of said amplifier (30),
(c) a force transducer (26) arranged between said servo-motor (28) and said element (1) and having its output coupled with a first input of said ampilfier (30),
(d) a position transducer (37) coupled with said element (1) and having its output coupled with a second input of said amplifier (30), and
(e) a computer (36) for calculating a force associated with the state of said element (1) and supplying a related signal to the amplifier (30) on the basis of the flight conditions and the relevant mechanical properties of said element (1), said computer (36) being coupled with the amplifier (30) through an electical analogue (51, 52, 53, 54) representing the Coulomb-friction, the damping and the mass of said element, characterized in that said analogue (51, 52, 53, 54) comprises a non-linear amplifier (51, 54) having a dead band, i.e. supplying a zero output signal for input signals below a certain threshold, said amplifier (51, 54) being provided with a negative feedback loop (52, 53) comprising a differentiator (52), said dead band corresponding with said friction, the gain of said amplifier (51, 54) corresponding with the damping and the gain of said feedback-loop corresponding with the mass of said element (1).

2. The flight simulator according to claim 1, characterized in that the dead band of the non-linear amplifier (51, 54) is adjustable.

3. The flight simulator according to claim 1 or 2, characterized in that the gain of the non-linear amplifier (51, 54) is adjustable.

4. The flight simulator according to claim 1, 2 or 3, characterized in that gain of the feedback-loop comprising the differentiator (52) is adjustable.

## Patentansprüche

1. Flugsimulator mit:
(1) einem Element (1), dessen Position sich während des Fluges verändern kann, z.B. einer Steuereinrichtung wie z.B. einem Steuerknüppel (1) und
(2) Servo-Einrichtungen, die mit dem Element gekoppelt sind, wobei die Servo-Einrichtungen
(a) einen Verstärker (30),
(b) einen Servo-Motor (28), der mit dem Ausgang des Verstärkers (30) gekoppelt ist,
(c) einen Kraftübertrager (26), der zwischen dem Servo-Motor (28) und em Element (1) angeordnet ist und dessen Ausgang mit dem ersten Eingang des Verstärkers (30) verbunden ist,
(d) einen Positionsübertrager (37), der mit dem Element (1) gekoppelt ist und dessen Ausgang mit dem zweiten Eingang des Verstärkers (30) gekoppelt ist, und
(e) einen Computer (36) zur Berechnung einer Kraft in Verbindung mit dem Zustand des Elementes (1) und zum Anlegen eines entsprechenden Signales an den Verstärker (30) aufgrund der Flugbedingungen und der jeweiligen mechanischen Eigenschaften des Elementes (1), wobei der Computer (36) mit dem Verstärker (30) über eine elektrische Analogschaltung, die die Coulomb-Reibung, die Dampfung und die Masse des Elementes repräsentiert, verbunden ist, aufweisen, dadurch gekennzeichnet, daß die Analogschaltung (51, 52, 53, 54) einen nichtlinearen Verstärker (51, 54) aufweist, mit einem unwirksamen Bereich, d.h., daß dieser ein Null-Ausgangssignal bei einem Eingangssignal unterhalb einem bestimmten Schwellwert ausgibt, der Verstärker (51, 54) eine negative Rückkopplung (52, 53) mit einer Differenziereinrichtung (52) aufweist, der umwirksame Bereich der Reibung entspricht, die Verstärkung des Verstärkers (51, 54) der Dämpfung entspricht und die Verstärkung der Rückkopplung der Masse des Elementes (1) entspricht.

2. Flugsimulator nach Anspruch 1, dadurch gekennzeichnet, daß der unwirksame Bereich des nichtlinearen Verstärkers (51, 54) einstellbar ist.

3. Flugsimulator nach Anspruch 1 oder 2, dadurch gekennzeichnet, daß die Verstärkung des nichtlinearen Verstärkers (51, 54) einstellbar ist.

4. Flugsimulator nach Anspruch 1, 2 oder 3, dadurch gekennzeichnet, daß die Verstärkung der Rückkopplung mit der Differenziereinrichtung (52) einstellbar ist.

**Revendications**

1. Simulateur de vol, comportant:

(1) un élément (1) dont la position peut changer pendant le vol, par exemple un élément de commande comme un levier de commande (1) et

(2) un dispositif d'asservissement accouplé avec ledit élément, ledit dispositif d'asservissement comportant:

(a) un amplificateur (30),

(b) un servomoteur (28) relié à la sortie dudit amplificateur (30),

(c) un transducteur de force (26) disposé entre ledit servomoteur (28) et ledit élément (1) et dont la sortie est reliée à une première entrée dudit amplificateur (30),

(d) un transducteur de position (37) accouplé avec ledit élément (1) et dont la sortie est connectée à la seconde entrée dudit amplificateur (30) et

(e) un calculateur (36) destiné à calculer une force associée avec l'état dudit élément (1) et fournissant un signal, qui lui est lié à l'amplificateur (30) sur la base des conditions de vol et des propriétés mécaniques concernées dudit élément (1), ledit calculateur (36) étant relié à l'amplificateur (30) par un circuit électrique équivalent représentant le frottement de Coulomb, l'amortissement et la masse dudit élément, caractérisé en ce que ledit circuit équivalent (51, 52, 53, 54) consiste en un amplificateur non linéaire (51, 54) ayant une bande morte, c'est-à-dire produisant un signal de sortie nul pour des signaux d'entrée au-dessous d'un certain seuil, ledit amplificateur (51, 54) comportant une boucle de réaction négative (52, 53) consistant en un circuit differenciateur teur (52), ladite bande morte correspondant audit frottement, le gain dudit amplificateur (51, 54) correspondant à l'amortissement et le gain de ladite boucle de réaction correspondant à la masse dudit élément (1).

2. Simulateur de vol selon la revendication 1, caractérisé en ce que la bande morte de l'amplificateur non linéaire (51, 54) est réglable.

3. Simulateur de vol selon la revendication 1 ou 2, caractérisé en ce que le gain de l'amplificateur non linéaire (51, 54) est réglable.

4. Simulateur de vol selon la revendication 1, 2 ou 3, caractérisé en ce que le gain de la boucle de reaction comprenant le circuit différenciateur (52) est réglable.

0 051 896

FIG.1

FIG.2

FIG.3          FIG.5

FIG.4

1

FIG.6

FIG. 7